# EUROPEAN PATENT APPLICATION

(11) **EP 4 307 512 A1**
(43) Date of publication of application: **17.01.2024**
(21) Application number: 22774241.8
(22) Date of filing: 22.03.2022
(51) Int. Cl.: H02J 3/38, H02J 1/10, H02S 50/10

(54) **PHOTOVOLTAIC POWER GENERATION SYSTEM, POWER CONTROL DEVICE, AND ENERGY STORAGE SYSTEM**

(30) Priority: 25.03.2021 CN 202110319259
(71) Applicant: Huawei Digital Power Technologies Co., Ltd., Shenzhen, Guangdong 518043 (CN)
(72) Inventor: LU, Qingsong, Shenzhen, Guangdong 518043 (CN); XU, Zhiwu, Shenzhen, Guangdong 518043 (CN)
(74) Representative: Gill Jennings & Every LLP
(86) International application number: PCT/CN2022/082324
(87) International publication number: WO 2022/199585

(57) **Abstract**

This application provides a photovoltaic power generation system, a power control apparatus, and an energy storage system, to stabilize a total power on a direct current side of the photovoltaic power generation system and avoid power fluctuation. The photovoltaic power generation system includes a plurality of photovoltaic batteries, a direct current/direct current conversion module, a direct current bus capacitor, an energy storage component, and a power control apparatus, where an input side of the direct current/direct current conversion module is coupled to the plurality of photovoltaic batteries, an output side of the direct current/direct current conversion module is coupled to the direct current bus capacitor, and is configured to adjust an operating status of each photovoltaic battery, and output electric energy provided by the photovoltaic batteries to the direct current bus capacitor; the energy storage component is coupled to the direct current bus capacitor, and is configured to store or provide electric energy; the power control apparatus is separately coupled to the direct current bus capacitor and the energy storage component, and is configured to: detect a first voltage of the direct current bus capacitor, and when the first voltage meets a preset compensation condition, control the energy storage component to charge the direct current bus capacitor; and the direct current bus capacitor is configured to couple a load.

## Description

### CROSS-REFERENCE TO RELATED APPLICATIONS

This application claims priority to Chinese Patent Application No. 202110319259.2, filed with the China National Intellectual Property Administration on March 25, 2021 and entitled "PHOTOVOLTAIC POWER GENERATION SYSTEM, POWER CONTROL APPARATUS, AND ENERGY STORAGE SYSTEM", which is incorporated herein by reference in its entirety.

### TECHNICAL FIELD

This application relates to the field of photovoltaic power generation technologies, and in particular, to a photovoltaic power generation system, a power control apparatus, and an energy storage system.

### BACKGROUND

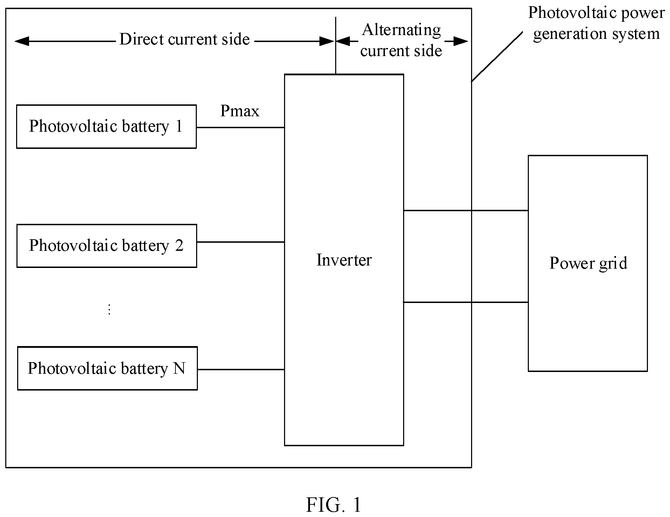

To detect a performance parameter of a photovoltaic battery in a photovoltaic power generation system, for example, performing multi-peak scanning or IV curve scanning, an output voltage (also a voltage that is input to a direct current/direct current conversion module) of the photovoltaic battery usually needs to be adjusted, which may cause fluctuation of a direct current side input power of the photovoltaic power generation system. For example, when IV curve scanning is performed on the photovoltaic battery, generally, an open-circuit voltage of the photovoltaic battery is gradually reduced to a short-circuit voltage, or the short-circuit voltage is increased to the open-circuit voltage. Because the output voltage of the photovoltaic battery changes, a current that is output by a measured photovoltaic battery also changes accordingly, and consequently, an output power of the measured photovoltaic battery is unstable, that is, power fluctuation occurs. As shown in FIG. 1, this makes an input power on a direct current side of an inverter in the photovoltaic power generation system fluctuate, and consequently, an output power on an alternating current side of the inverter fluctuates greatly, affecting a power grid connected to the photovoltaic power generation system, for example, causing a power grid accident.

### SUMMARY

This application provides a photovoltaic power generation system, a power control apparatus, and an energy storage system, to stabilize a total power on a direct current side of the photovoltaic power generation system and avoid power fluctuation.

According to a first aspect, this application provides a photovoltaic power generation system, including a plurality of photovoltaic batteries, a direct current/direct current conversion module, a direct current bus capacitor, an energy storage component, and a power control apparatus, where an input side of the direct current/direct current conversion module is coupled to the plurality of photovoltaic batteries, an output side of the direct current/direct current conversion module is coupled to the direct current bus capacitor, and is configured to adjust an operating status of each photovoltaic battery, and output electric energy provided by the photovoltaic batteries to the direct current bus capacitor; the energy storage component is coupled to the direct current bus capacitor, and is configured to store or provide electric energy; the power control apparatus is separately coupled to the direct current bus capacitor and the energy storage component, and is configured to: detect a first voltage of the direct current bus capacitor, and when the first voltage meets a preset compensation condition, control the energy storage component to charge the direct current bus capacitor; and the direct current bus capacitor is configured to couple a load.

In this embodiment of this application, the power control apparatus is separately coupled to the direct current bus capacitor and the energy storage component in the photovoltaic power generation system, and detects a voltage on the direct current bus capacitor. When the detected first voltage meets the preset compensation condition, the power control apparatus may control the energy storage component to charge the direct current bus capacitor, and compensate for a total power on a direct current side of the photovoltaic power generation system, to stabilize the total power on the direct current side of the photovoltaic power generation system, and avoid power fluctuation.

In a possible design, when controlling the energy storage component to charge the direct current bus capacitor, the power control apparatus is specifically configured to control the energy storage component to provide a second voltage for the direct current bus capacitor, where the second voltage is determined based on the first voltage and a bus reference voltage, and the bus reference voltage is determined based on open-circuit voltages of some photovoltaic batteries in the plurality of photovoltaic batteries and a peak line voltage of the load.

In this embodiment of this application, the power control apparatus may determine, based on the bus reference voltage and the detected first voltage of the direct current bus capacitor, the second voltage provided when the energy storage component charges the direct current bus capacitor. The bus reference voltage may be a peak line voltage of a load coupled to the photovoltaic power generation system, or an open-circuit voltage of some photovoltaic batteries in the photovoltaic power generation system.

In a possible design, the power control apparatus may be further configured to: if the first voltage does not meet the preset compensation condition, control the energy storage component to obtain first electric energy from the direct current bus capacitor and store the first electric energy, where the first electric energy is determined based on the first voltage and the bus reference voltage.

In this embodiment of this application, when the detected first voltage of the direct current bus capacitor does not meet the preset compensation condition, the power control apparatus may control the energy storage component to absorb a power from the direct current bus capacitor, for example, obtain first electric energy, and store the absorbed or obtained energy. The absorbed power or the obtained first electric energy may be determined based on the first voltage and the bus reference voltage. For example, when the total power on the direct current side of the photovoltaic power generation system increases, the energy storage component is controlled to store a part of electric energy.

In a possible design, if a maximum value in the open-circuit voltages corresponding to the some photovoltaic batteries is greater than or equal to the peak line voltage of the load, the bus reference voltage may be the maximum value in the open-circuit voltages corresponding to the some photovoltaic batteries; or if a maximum value in the open-circuit voltages corresponding to the some photovoltaic batteries is less than the peak line voltage of the load, the bus reference voltage may be the peak line voltage of the load.

In this embodiment of this application, the some photovoltaic batteries may be one or more photovoltaic batteries in an abnormal operating status. If the maximum value in the open-circuit voltages corresponding to the some photovoltaic batteries is greater than or equal to the peak line voltage of the load, the bus reference voltage may be selected as the maximum value in the open-circuit voltages corresponding to the some photovoltaic batteries. On the contrary, if the maximum value in the open-circuit voltages corresponding to the some photovoltaic batteries is less than the peak line voltage of the load, the bus reference voltage may be selected as the peak line voltage of the load. The bus reference voltage may be used to determine a second voltage provided by the energy storage component for the direct current bus capacitor.

In a possible design, the power control apparatus is further coupled to the direct current/direct current conversion module. Before detecting the first voltage of the direct current bus capacitor, the power control apparatus may control, in response to a first instruction, the direct current/direct current conversion module to perform IV curve scanning on a first photovoltaic battery, where the first photovoltaic battery is any one of the some photovoltaic batteries, or control, in response to a second instruction, the direct current/direct current conversion module to perform multi-peak scanning on the first photovoltaic battery.

In this embodiment of this application, the power control apparatus may control, in response to the received instruction, the direct current/direct current conversion module to enable some photovoltaic batteries to be in the abnormal operating status, for example, perform an operation such as IV curve scanning or multi-peak scanning on the first photovoltaic battery. When the first photovoltaic battery changes from a normal operating status to the abnormal operating status, an output power of the first photovoltaic battery fluctuates, and consequently, the total power on the direct current side of the photovoltaic power generation system fluctuates. The power control apparatus controls the energy storage component to charge the direct current bus capacitor, to compensate for fluctuation of the total power on the direct current side of the photovoltaic power generation system caused by the output power of the some photovoltaic batteries, thereby stabilizing the total power on the direct current side of the photovoltaic power generation system, and the load is unaware of this.

In a possible design, the system may further include a direct current/alternating current inverter module; an input side of the direct current/alternating current inverter module is coupled to the direct current bus capacitor, and an output side of the direct current/alternating current inverter module is configured to be coupled to the load; and the direct current/alternating current inverter module is configured to convert electric energy that is output by the direct current/direct current conversion module to the direct current bus capacitor into an alternating current, and then provide the alternating current for the load.

In this embodiment of this application, the direct current/alternating current inverter module in the photovoltaic power generation system may be coupled to the load, to provide the alternating current for the load. When the voltage of the direct current bus capacitor meets the preset compensation condition, the power control apparatus controls the energy storage component to charge the direct current bus capacitor, to compensate for the total power on the direct current side of the photovoltaic power generation system. This can stabilize the total power on the input side of the direct current/alternating current inverter module, and help stabilize the total power provided by the output side of the direct current/alternating current inverter module for the load.

In a possible design, the power control apparatus is specifically configured to control the direct current/alternating current inverter module to output an alternating current of a first power for the load; the first power is determined based on a first current and a third voltage; and the first current and the third voltage are a current and a voltage that are output by the direct current/alternating current inverter module before the power control apparatus controls the direct current/direct current conversion module to perform IV curve scanning on some photovoltaic batteries in the plurality of photovoltaic batteries, or controls the direct current/direct current conversion module to perform multi-peak scanning on the some photovoltaic batteries.

In this embodiment of this application, the power control apparatus may control the direct current/alternating current inverter module to be in a constant power mode, that is, output a stable power. For example, the output power of the direct current/alternating current inverter module is controlled to be close to the output power of the direct current/alternating current inverter module that is generated before the direct current/direct current inverter module performs IV curve scanning or multi-peak scanning on some photovoltaic batteries.

In a possible design, the load may be on a power grid side, that is, the photovoltaic power generation system may provide a power for the power grid or supply power to the power grid.

In a possible design, the power control apparatus may include a plurality of controllers. The plurality of controllers may collaboratively implement functions of the power control apparatus in the foregoing embodiments. The plurality of controllers may be separately integrated with different modules or circuit devices in the photovoltaic power generation system.

According to a second aspect, this application provides a photovoltaic power generation system, where the photovoltaic power generation system may include a plurality of photovoltaic batteries, a plurality of direct current/direct current conversion circuits, a direct current bus capacitor, an energy storage component, a direct current/alternating current inverter module, and a power control apparatus. An input side of each of the direct current/direct current conversion circuits is coupled to one photovoltaic battery, an output side of each of the direct current/direct current conversion circuits is coupled to the direct current bus capacitor, and is configured to: adjust an operating status of a connected photovoltaic battery, and output electric energy provided by the connected photovoltaic battery to the direct current bus capacitor. The energy storage component is coupled to the direct current bus capacitor, and is configured to store or provide electric energy. An input side of the direct current/alternating current inverter module is coupled to the direct current bus capacitor, and an output side of the direct current/alternating current inverter module is coupled to a load, and is configured to convert electric energy on the direct current bus capacitor into an alternating current, and then provide the alternating current for the load. The power control apparatus is separately coupled to the plurality of direct current/direct current conversion circuits, the direct current bus capacitor, the energy storage component, and the direct current/alternating current inverter module, and is configured to: after receiving an IV curve scanning instruction, determine a first power provided by the direct current/alternating current inverter module for the load, where the instruction is used to indicate performing IV curve scanning on a first photovoltaic battery, and the first photovoltaic battery is at least one photovoltaic battery in the plurality of photovoltaic batteries. Then the power control apparatus controls a first direct current/direct current conversion circuit connected to each photovoltaic battery in the first photovoltaic battery to adjust each photovoltaic battery to operate in an open-circuit state, and determine an open-circuit voltage of each photovoltaic battery. In addition, the power control apparatus determines a bus reference voltage based on the open-circuit voltage of each photovoltaic battery and a peak line voltage of the load, where the bus reference voltage is a voltage threshold used to determine whether the energy storage component charges the direct current bus capacitor or obtains electric energy from the direct current bus capacitor.

In this embodiment of this application, before IV curve scanning is performed on the first photovoltaic battery in the photovoltaic power generation system, the power control apparatus may determine the bus reference voltage by using an open-circuit voltage of each photovoltaic battery in the first photovoltaic battery and a line voltage of the load. The power control apparatus may use the determined bus reference voltage as a voltage threshold for determining whether it is required to control the energy storage component to charge the direct current bus capacitor or obtain electric energy from the direct current bus capacitor. The power control apparatus may use the determined bus reference voltage as the voltage threshold to control the energy storage component. For example, the energy storage component is controlled to charge the direct current bus capacitor or absorb electric energy of the direct current bus capacitor, so that the total power on the direct current side of the photovoltaic power generation system can be adjusted when IV curve scanning is performed on the first photovoltaic battery.

In a possible design, the power control apparatus may control, in response to the IV curve scanning instruction, the first direct current/direct current conversion circuit to perform IV curve scanning on the first photovoltaic battery, and detect a first voltage of the direct current bus capacitor in a process in which the first direct current/direct current conversion circuit performs IV curve scanning on the first photovoltaic battery. When the first voltage is less than the bus reference voltage, the power control apparatus controls the energy storage component to charge the direct current bus capacitor; or when the first voltage is greater than the bus reference voltage, the power control apparatus controls the energy storage component to obtain first electric energy from the direct current bus capacitor and store the first electric energy, where the first electric energy is determined based on the first voltage and the bus reference voltage. In the process in which the first direct current/direct current conversion circuit performs IV curve scanning on the first photovoltaic battery, the power control apparatus controls the direct current/alternating current inverter module to work in a constant power output state, where the constant power output state is converting a direct current on the direct current bus capacitor into an alternating current of a second power and providing the alternating current to the load, and a difference between the second power and the first power is less than a preset power threshold.

In this embodiment of this application, in a process of performing IV curve scanning on the first photovoltaic battery in the photovoltaic power generation system, to stabilize the power of the direct current bus capacitor, the power control apparatus may control the energy storage component to charge the direct current bus capacitor, or absorb electric energy of the direct current bus capacitor to stabilize the power of the direct current bus capacitor, that is, stabilize the total power on the direct current side of the photovoltaic power generation system. The power control apparatus may also control the direct current/alternating current inverter module to work in a constant power output state during IV curve scanning on the first photovoltaic battery, and a second power provided for the load is close to the first power generated when the IV curve scanning is not performed on the first photovoltaic battery, which reduces total power fluctuation on an alternating current side of the photovoltaic power generation system, avoids impact on the load, and enables the load to be unaware of a total power change on the direct current side of the photovoltaic power generation system.

In a possible design, when controlling the energy storage component to charge the direct current bus capacitor, the power control apparatus is specifically configured to: control the energy storage component to provide a second voltage for the direct current bus capacitor, where the second voltage is determined based on the first voltage and the bus reference voltage.

In a possible design, the power control apparatus is further configured to: control a direct current/direct current conversion circuit other than the first direct current/direct current conversion circuit in the plurality of direct current/direct current conversion circuits to work in a maximum power point tracking MPPT state.

In this embodiment of this application, the power control apparatus may further control another direct current/direct current conversion circuit other than the first direct current/direct current conversion circuit in the system to operate in the MPPT state, so that photovoltaic batteries connected to the another direct current/direct current conversion circuit can output a maximum power, and the total power on the direct current side of the photovoltaic power generation system can be increased.

In a possible design, the bus reference voltage is a maximum value of the open-circuit voltage of each photovoltaic battery in the first photovoltaic battery and the peak line voltage of the load.

In a possible design, when performing IV curve scanning on the first photovoltaic battery, the first direct current/direct current conversion circuit is specifically configured to: adjust an output voltage of each photovoltaic battery in the first photovoltaic battery, and record output currents of each photovoltaic battery at different output voltages; and send the recorded output currents of each photovoltaic battery at the different output voltages to a first device, where the first device is a device that sends the IV curve scanning instruction.

According to a third aspect, this application provides a power control apparatus, which may be used in a photovoltaic power generation system, where the photovoltaic power generation system includes a plurality of photovoltaic batteries, a direct current/direct current conversion module, a direct current bus capacitor, and an energy storage component, an input side of the direct current/direct current conversion module is coupled to the plurality of photovoltaic batteries, an output side of the direct current/direct current conversion module is coupled to the direct current bus capacitor, the energy storage component is coupled to the direct current bus capacitor, and the direct current bus capacitor is configured to couple a load; the power control apparatus includes a detection circuit and a control circuit, where the detection circuit is configured to detect a first voltage of the direct current bus capacitor; and the control circuit is coupled to the detection circuit, and is configured to: when it is determined that the first voltage meets a preset compensation condition, control the energy storage component to charge the direct current bus capacitor.

In this embodiment of this application, the power control apparatus is separately coupled to the direct current bus capacitor and the energy storage component in the photovoltaic power generation system, and detects a voltage on the direct current bus capacitor. When the detected first voltage meets the preset compensation condition, the power control apparatus may control the energy storage component to charge the direct current bus capacitor, and compensate for a total power on a direct current side of the photovoltaic power generation system, to stabilize the total power on the direct current side of the photovoltaic power generation system, and avoid power fluctuation.

In a possible design, when controlling the energy storage component to charge the direct current bus capacitor, the control circuit is specifically configured to control the energy storage component to provide a second voltage for the direct current bus capacitor, where the second voltage is determined based on the first voltage and a bus reference voltage, and the bus reference voltage is determined based on open-circuit voltages of some photovoltaic batteries in the plurality of photovoltaic batteries and a peak line voltage of the load.

In a possible design, the control circuit is further configured to: if it is determined that the first voltage does not meet the preset compensation condition, control the energy storage component to obtain first electric energy from the direct current bus capacitor and store the first electric energy, where the first electric energy is determined based on the first voltage and the bus reference voltage.

In a possible design, if a maximum value in the open-circuit voltages corresponding to the some photovoltaic batteries is greater than or equal to the peak line voltage of the load, the bus reference voltage is determined as the maximum value in the open-circuit voltages corresponding to the some photovoltaic batteries; or if a maximum value in the open-circuit voltages corresponding to the some photovoltaic batteries is less than the peak line voltage of the load, the bus reference voltage is determined as the peak line voltage of the load.

In a possible design, the control circuit is further configured to: before the detection circuit detects the first voltage of the direct current bus capacitor, control, in response to a first instruction, the direct current/direct current conversion module to perform IV curve scanning on a first photovoltaic battery, where the first photovoltaic battery is any one of the some photovoltaic batteries, or control, in response to a second instruction, the direct current/direct current conversion module to perform multi-peak scanning on the first photovoltaic battery, that is, the first photovoltaic battery is in an abnormal operating status.

According to a fourth aspect, this application provides an energy storage system, where the energy storage system may include an energy storage component and any power control apparatus according to the second aspect and possible designs. The energy storage system may be used in a photovoltaic power generation system. The photovoltaic power generation system includes a plurality of photovoltaic batteries, a direct current/direct current conversion module, and a direct current bus capacitor that are sequentially coupled. The direct current bus capacitor is configured to be coupled to a load. The energy storage system may include an energy storage component and a power control apparatus. The power control apparatus is separately coupled to the direct current bus capacitor and the energy storage component, and the energy storage component is coupled to the direct current bus capacitor.

For technical effects that can be achieved in the third aspect and the fourth aspect, refer to descriptions of technical effects that can be achieved in corresponding designs in the first aspect or the second aspect. Details are not described herein again.

### BRIEF DESCRIPTION OF DRAWINGS

FIG. 1 is a schematic diagram of an architecture of a photovoltaic power generation system;
FIG. 2 is a schematic diagram of a structure of a photovoltaic power generation system;
FIG. 3 is a schematic diagram of a structure of a photovoltaic power generation system;
FIG. 4 is a schematic diagram of a structure of a photovoltaic power generation system;
FIG. 5 is a schematic flowchart of a photovoltaic power generation system power control method;
FIG. 6 is a schematic flowchart of a photovoltaic power generation system power control method;
FIG. 7 is a schematic diagram of a structure of an energy storage system;
FIG. 8 is a schematic diagram of a structure of a photovoltaic power generation system; and
FIG. 9 is a schematic diagram of a structure of a photovoltaic power generation system.

### DESCRIPTION OF EMBODIMENTS

The following describes the embodiments of this application in detail with reference to the accompanying drawings.

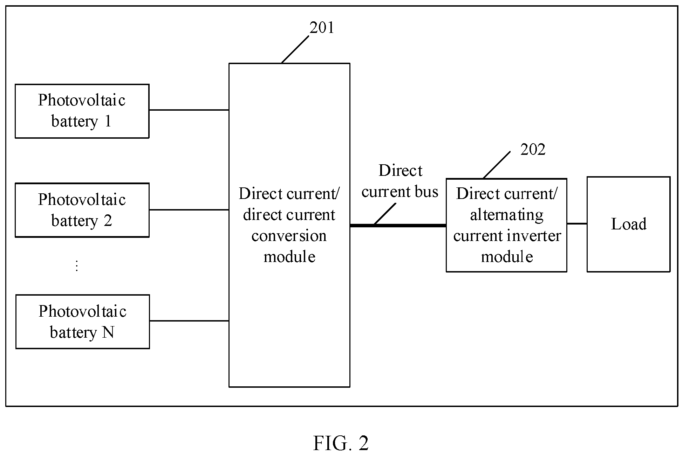

As shown in FIG. 2, a current photovoltaic power generation system may include a plurality of photovoltaic batteries (for example, a photovoltaic battery 1, a photovoltaic battery 2, ..., a photovoltaic battery N). Each photovoltaic battery may include at least one photovoltaic string. A component between the photovoltaic battery and a load may include at least one direct current/direct current conversion module 201 and a direct current bus. Each photovoltaic battery is connected to the direct current/direct current conversion module 201. The direct current/direct current conversion module 201 may adjust an operating status of each photovoltaic battery. For example, the direct current/direct current conversion module 201 may be configured to adjust an output voltage of each photovoltaic battery (that is, a voltage that is provided or output by each photovoltaic battery to the direct current/direct current conversion module 201).

The direct current bus may be connected to the load, for example, a direct current load, that is, the photovoltaic power generation system may provide a total output power for the direct current load. The direct current/direct current conversion module 201 is connected to the direct current bus, and the direct current/direct current conversion module 201 provides an output power of each photovoltaic battery for the direct current load via the direct current bus. Optionally, the direct current load may be a direct current/alternating current inverter module 202 or an inverter.

The photovoltaic power generation system can supply power to an alternating current load. As shown in FIG. 2, the photovoltaic power generation system may further include the direct current/alternating current inverter module 202. The direct current/alternating current inverter module 202 is coupled to the direct current bus, and the direct current bus is coupled to the load by using the direct current/alternating current inverter module 202. The direct current/alternating current inverter module 202 may convert a direct current on the current bus into an alternating current. The direct current/alternating current inverter module 202 may be connected to the load, so that the photovoltaic power generation system may provide an output power for the load.

The direct current/alternating current inverter module 202 may include one or more direct current/alternating current inverter circuits. A direct current side of each direct current/alternating current inverter circuit is coupled to a direct current bus capacitor, that is, each direct current/alternating current inverter circuit may be connected in parallel to two poles of the direct current bus capacitor. The direct current bus may further include a plurality of switches, and at least one switch may be disposed on a connection line between the direct current bus capacitor and each direct current/alternating current inverter circuit. The direct current/direct current conversion module 201 may provide a direct current for at least one direct current/alternating current inverter circuit via the direct current bus. Optionally, the direct current bus and the direct current/alternating current inverter module 202 may form a first inverter system, and convert a direct current that is output by the direct current/direct current conversion module 201 into an alternating current. The direct current/direct current conversion module 201, the direct current bus, and the direct current/alternating current inverter module 202 may form a second inverter system, and convert a direct current that is output by each photovoltaic battery into an alternating current.

Generally, detecting a performance parameter of a photovoltaic battery in the photovoltaic power generation system may include but is not limited to a scenario such as detecting an IV curve of the photovoltaic battery, performing multi-peak scanning on the photovoltaic battery, or detecting an operating point of a maximum output power of the photovoltaic battery. Because the output voltage of the photovoltaic battery needs to be adjusted, the photovoltaic battery cannot work normally. In other words, the output voltage of the photovoltaic battery is in an abnormal working state (for example, an output power is in a non-maximum power state), and thus, the output power of the photovoltaic battery is unstable. The following uses performing IV curve scanning on the photovoltaic battery as an example for description.

The IV curve scanning technology is used for abnormal diagnosis of the photovoltaic battery in the photovoltaic power generation system or a photovoltaic power station. An IV curve of a detected photovoltaic battery obtained through scanning is compared with an IV curve of a normal (non-abnormal) photovoltaic battery, to determine whether the detected photovoltaic battery is abnormal. In a process of performing IV curve scanning on the detected photovoltaic battery, because an input voltage of the detected photovoltaic battery changes, a current of the detected photovoltaic battery also changes accordingly. As a result, an output power of the detected photovoltaic battery is unstable, that is, power fluctuation occurs. Therefore, an input power on a direct current side of the photovoltaic power generation system (as shown in FIG. 1) fluctuates, resulting in large fluctuation in the output power of the photovoltaic power generation system. If the output power of the photovoltaic power generation system fluctuates, a power grid connected to the photovoltaic power generation system may be affected. If a power grid accident occurs, an owner who accepts dispatch of the photovoltaic power generation system will be fined by an electric power company.

To avoid fluctuation of a power provided by the photovoltaic power generation system for the power grid in a process of performing IV curve scanning on the photovoltaic battery in the photovoltaic power generation system, generally, a total input power on the direct current side of the photovoltaic power generation system is stabilized by sacrificing a maximum output power Pmax of the measured photovoltaic battery. In this case, the total input power Ptotal_test on the direct current side of the photovoltaic power generation system is less than a total input power Ptotal (that is, a total input power of the photovoltaic power generation system that operates normally) on a direct current side of a photovoltaic power generation system in which IV curve scanning is performed on any photovoltaic battery, that is, Ptotal_test ≤ Ptotal - Pmax. In such a design, when IV curve scanning is performed on the photovoltaic battery in the photovoltaic power generation system, the total input power Ptotal_test on the direct current side of the photovoltaic power generation system is stable, so that the output power of the photovoltaic power generation system (that is, a power provided by an alternating current side for the power grid) is constant. It can be learned that, in such a design, a total output power of the inverter is constant, but the total output power of the inverter is less than a total output power of the photovoltaic power generation system (that is, the total output power of the photovoltaic power generation system that operates normally) when IV curve scanning is not performed on any photovoltaic battery.

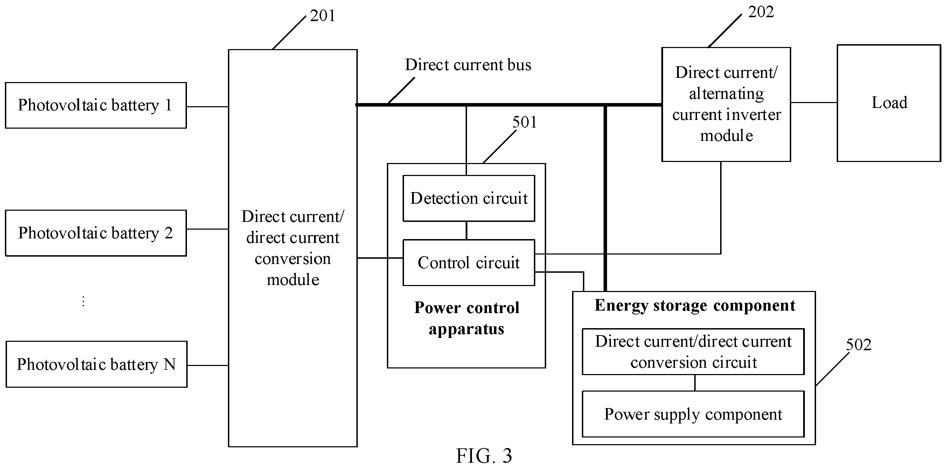

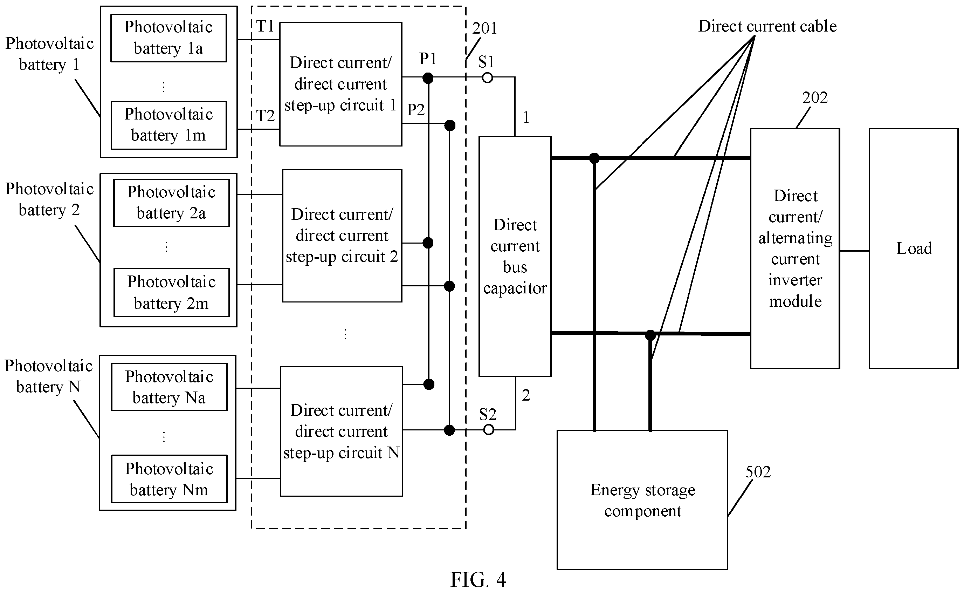

In view of this, in this embodiment of this application, based on the photovoltaic power generation system shown in FIG. 2, a power control apparatus 501 and an energy storage component 502 are added. Details are shown in FIG. 3. The power control apparatus 501 may be coupled to the direct current bus, and is configured to detect a voltage of the direct current bus. For example, the power control apparatus 501 is coupled to a direct current bus capacitor in the direct current bus, and may detect a voltage of the direct current bus capacitor. The energy storage component 502 is coupled to the direct current bus, for example, connected to the direct current bus capacitor in the direct current bus. The energy storage component 502 may store or provide electric energy. As shown in FIG. 4, a first end of the energy storage component 502 may be connected to a first electrode 1 of a direct current bus capacitor, and a second end of the energy storage component 502 may be connected to a second electrode 2 of the direct current bus capacitor.

The energy storage component 502 may include at least one power supply component, and the power supply component may include one or more batteries. Optionally, the battery may be a rechargeable and dis-chargeable battery such as a lithium battery or a lead-acid battery. The energy storage component 502 may supply power to the direct current bus capacitor, that is, charge the direct current bus capacitor, or provide (or output) a power for the direct current bus capacitor. The electric energy stored in the energy storage component 502 may come from the direct current bus capacitor, for example, absorb a power from the direct current bus capacitor. The electric energy in the energy storage component 502 may also come from another apparatus.

The power control apparatus 501 may be coupled to the energy storage component 502. The power control apparatus 501 may detect whether a first voltage on the direct current bus capacitor meets a preset compensation condition. In a case that the first voltage meets the preset compensation condition, the power control apparatus 501 may control the energy storage component 502 to charge the direct current bus capacitor, or control the energy storage component 502 to output (or provide) a power to the direct current bus capacitor.

In a possible implementation, the preset compensation condition may be that a detected voltage on the direct current bus capacitor is less than a target total voltage (or referred to as a bus reference voltage). The bus reference voltage may be used as a voltage threshold for the power control apparatus 501 to determine whether to control the energy storage component 502 to charge the direct current bus capacitor. The power control apparatus 501 may control, when the detected voltage on the direct current bus capacitor is less than the bus reference voltage, the energy storage component 502 to charge the direct current bus capacitor. Optionally, the bus reference voltage may be a total voltage that is output by the direct current bus capacitor in a case that the photovoltaic power generation system is in a normal operating status (for example, the plurality of photovoltaic batteries all work in the normal operating status).

In another possible implementation, the preset compensation condition may also be that a total detection power determined based on the detected voltage on the direct current bus capacitor is less than a target total power (or referred to as a first bus reference power). The total detection power may be determined based on the detected voltage on the direct current bus capacitor and a current at the direct current bus capacitor when the voltage is detected. The target total power may be a total power that is output by the direct current bus capacitor when all the plurality of photovoltaic batteries in the photovoltaic power generation system work in the normal operating status. To be specific, a total output power of the direct current bus capacitor when the photovoltaic power generation system operates normally.

When the energy storage component 502 charges the direct current bus capacitor, the energy storage component 502 may provide a second voltage for the direct current bus capacitor. The second voltage may be determined by the power control apparatus 501 based on the detected first voltage on the direct current bus capacitor and the bus reference voltage. For example, the second voltage may be an absolute value M of a difference between the bus reference voltage and the first voltage, or the second voltage may be a sum of M and a preset voltage value. The energy storage component 502 provides the second voltage for the direct current bus capacitor, to improve the total output power of the direct current bus capacitor, and maintain stability of the total output power of the direct current bus capacitor, for example, maintain the total output power of the direct current bus capacitor as a power corresponding to the bus reference voltage. Therefore, in the photovoltaic power generation system provided in this embodiment of this application, in a case that the output voltage of the photovoltaic battery changes, the output power of the photovoltaic power generation system can be relatively stable, and fluctuation of the output power of the photovoltaic power generation system can be prevented.

For example, the case that the output voltage of the photovoltaic battery changes may be the foregoing scenario in which the performance parameter of the photovoltaic battery is detected, or may be a scenario in which the photovoltaic battery is adjusted to work in another state (for example, multi-peak scanning, IV curve scanning, or fault detection) from the normal operating status (for example, a maximum output power state).

For example, at least one photovoltaic battery in the plurality of photovoltaic batteries is used as an example (the following uses an example in which the at least one photovoltaic battery is a first photovoltaic battery). The direct current/direct current conversion module 201 may include a plurality of direct current/direct current step-up circuits, and each direct current/direct current step-up circuit may be connected to one or more photovoltaic batteries. When an output voltage of the first photovoltaic battery changes, power fluctuation occurs in an output power (a power that is output to the direct current bus capacitor) of a direct current/direct current step-up circuit connected to the first photovoltaic battery. Consequently, a total power on an output side of the direct current/direct current conversion module 201 fluctuates, for example, energy yield of a photovoltaic battery on the direct current/direct current step-up circuit connected to the first photovoltaic battery is lost. The power control apparatus 501 controls the energy storage component 502 to provide the second voltage for the direct current bus capacitor. This can reduce impact on the total power of the output side of the direct current/direct current conversion module 201 due to power fluctuation of the first photovoltaic battery and power fluctuation of the output power of the direct current/direct current step-up circuit connected to the first photovoltaic battery. In other words, the power control apparatus 501 controls the energy storage component 502 to provide the second voltage for the direct current bus capacitor, to stabilize a total output power on the output side of the direct current/direct current conversion module 201, or the total power on the output side of the direct current/direct current conversion module 201 can be kept constant.

For example, for a connection relationship between the plurality of photovoltaic batteries and the direct current/direct current conversion module 201, refer to FIG. 4. The direct current/direct current conversion module 201 may include a plurality of direct current/direct current step-up circuits. One direct current/direct current step-up circuit may be connected to one photovoltaic battery. The photovoltaic battery may include a plurality of photovoltaic strings, and quantities of photovoltaic strings in the photovoltaic batteries may be the same or may be different. A plurality of photovoltaic strings in one photovoltaic battery are connected in parallel. An input side of the direct current/direct current step-up circuit is connected to the photovoltaic battery. For example, a first input end of the direct current/direct current step-up circuit is connected to a positive electrode of the photovoltaic battery, and a second input end is connected to a negative electrode of the photovoltaic battery. As shown in FIG. 4, a photovoltaic battery 1 is connected to an input side of a direct current/direct current step-up circuit 1, a positive electrode of the photovoltaic battery 1 may be connected to a first input end T1 of the direct current/direct current step-up circuit 1, and a negative electrode of the photovoltaic battery 1 may be connected to a second input end T2 of the direct current/direct current step-up circuit 1.

For a connection relationship between the direct current/direct current conversion module 201 and the direct current bus capacitor in the direct current bus, refer to FIG. 4. A first output end S 1 and a second output end S2 of the direct current/direct current conversion module 201 are respectively connected to two poles of the direct current bus capacitor. For example, the first output end S1 of the direct current/direct current conversion module 201 is connected to a positive electrode of the direct current bus capacitor, and the second output end S2 of the direct current/direct current conversion module 201 is connected to a negative electrode of the direct current bus capacitor. Alternatively, the first output end S1 of the direct current/direct current conversion module 201 is connected to the negative electrode of the direct current bus capacitor, and the second output end S2 of the direct current/direct current conversion module 201 is connected to the positive electrode of the direct current bus capacitor. Optionally, the direct current/direct current conversion module 201 and the direct current bus capacitor may form a direct current/direct current conversion apparatus, and may converge or integrate direct currents that are output by photovoltaic batteries.

Optionally, the photovoltaic power generation system in this embodiment of this application may be a string photovoltaic power generation system. As shown in FIG. 4, a first output end of each direct current/direct current step-up circuit may be connected to the first electrode of the direct current bus capacitor, and a second output end may be connected to the second electrode of the direct current bus capacitor, that is, direct current/direct current step-up circuits are connected in parallel. For example, a first output end P1 of the direct current/direct current step-up circuit 1 is connected to the first electrode 1 of the direct current bus capacitor, and a second output end P2 of the direct current/direct current step-up circuit 1 is connected to the second electrode 2 of the direct current bus capacitor.

In a possible implementation, in this embodiment of this application, that the power control apparatus 501 is coupled to another component may be that the power control apparatus 501 and another component are in direct physical and/or electrical contact with each other, or may be that the power control apparatus 501 and the another component are not in direct contact with each other, but may still collaborate and/or interact with each other. For example, the power control apparatus 501 is communicatively connected to the another component, and the power control apparatus 501 may send a message, an instruction, or a command to the another component, to instruct the another component to perform an operation corresponding to the message, the instruction, or the command.

The power control apparatus 501 may perform, in response to a control instruction, an operation corresponding to the control instruction. The control instruction may be sent by another electronic device (such as an upper computer, a server, a management background, or a remote management device) to the power control apparatus 501. The power control apparatus 501 may also detect an instruction triggered by a user, and perform an operation corresponding to the instruction. For example, the power control apparatus 501 may include components such as a display apparatus, a processor, and/or a button, so that the user triggers a first instruction by using a management interface, a menu, or the like displayed by the display apparatus.

For example, the power control apparatus 501 may control, in response to the first instruction, an operating status of at least one of the plurality of photovoltaic batteries (for example, the first photovoltaic battery). For example, the first photovoltaic battery is controlled to switch from working in the normal operating status to a status corresponding to the first instruction. Optionally, a quantity of first photovoltaic batteries is not less than 1, and the power control apparatus 501 may synchronously control operating statuses of two or more photovoltaic batteries.

For example, the power control apparatus 501 may control the first photovoltaic battery to switch from working in the normal operating status to working in the status corresponding to the first instruction. The first instruction may be an IV curve scanning instruction, and the power control apparatus 501 may perform IV curve scanning on the first photovoltaic battery. Alternatively, the first instruction may be a maximum power point detection instruction (or a multi-peak scanning instruction). The power control apparatus 501 may perform multi-peak scanning on the first photovoltaic battery by using a multi-peak scanning technology, or may determine, by performing multi-peak scanning on the first photovoltaic battery, a voltage corresponding to a maximum output power of the first photovoltaic battery.

As shown in FIG. 3, the power control apparatus 501 may be coupled to the direct current/direct current conversion module 201, to interact with the direct current/direct current conversion module 201. The power control apparatus 501 may adjust the operating status of the photovoltaic battery by controlling the direct current/direct current conversion module 201. For example, the power control apparatus 501 may send a second instruction to the direct current/direct current conversion module 201, and the second instruction may be used to instruct the direct current/direct current conversion module 201 to perform IV curve scanning on the first photovoltaic battery in a preset manner. Optionally, the direct current/direct current conversion module 201 may include a first controller, and the first controller may control each direct current/direct current step-up circuit in the direct current/direct current conversion module 201.

The direct current/direct current conversion module 201 may perform IV curve scanning on each photovoltaic battery in the first photovoltaic battery in the preset manner based on the received second instruction. For example, IV curve scanning is performed on the photovoltaic battery 1. The direct current/direct current conversion module 201 gradually reduces an output voltage of the photovoltaic battery 1 from an open-circuit voltage (that is, a voltage that is input by the photovoltaic battery 1 to the connected direct current/direct current step-up circuit 1) to a short-circuit voltage, and/or gradually increases the output voltage of the photovoltaic battery 1 from the short-circuit voltage to the open-circuit voltage. The current is measured and recorded when the voltage changes by the preset voltage value. An IV curve of the direct current/direct current step-up circuit 1 may be determined based on the recorded voltage and the corresponding current (scanned data).

The direct current/direct current conversion module 201, or the direct current/direct current step-up circuit may further send, during or after IV curve scanning, recorded voltages and corresponding currents to a device (such as an upper computer, a server, a management background, or a remote management device) that sends the first instruction to the power control apparatus 501. Optionally, the direct current/direct current conversion module 201 and/or the direct current/direct current step-up circuit may further include a data storage unit, configured to store each voltage and a corresponding current. In this embodiment of this application, the IV curve of the first photovoltaic battery may be obtained in another manner, or in other words, IV curve scanning may be performed in another manner, to obtain the IV curve of the first photovoltaic battery.

In this embodiment of this application, the power control apparatus 501 may control the first photovoltaic battery for IV curve scanning, multi-peak scanning, and the like. Because the first photovoltaic battery switches from the normal working status to an operating status in which IV curve scanning or multi-peak scanning is performed, power fluctuation occurs in the output power (the power that is output to the direct current bus capacitor) of the direct current/direct current step-up circuit connected to the first photovoltaic battery. Consequently, the total power on the output side of the direct current/direct current conversion module 201 fluctuates, for example, the energy yield of the photovoltaic battery on the direct current/direct current step-up circuit connected to the first photovoltaic battery is lost. In this case, the power control apparatus 501 may detect the first voltage of the direct current bus capacitor in a scenario such as controlling the first photovoltaic battery for IV curve scanning or multi-peak scanning, and determine whether the detected voltage of the direct current bus capacitor meets the preset compensation condition, that is, determine whether the detected voltage of the direct current bus capacitor is less than the bus reference voltage. If the detected first voltage of the direct current bus capacitor is less than the bus reference voltage, it may be determined that the output power of the direct current/direct current step-up circuit connected to the first photovoltaic battery fluctuates. To avoid the impact on the total power of the output side of the direct current/direct current conversion module 201 due to power fluctuation of the output power of the direct current/direct current step-up circuit connected to the first photovoltaic battery, the power control apparatus 501 may control the energy storage component 502 to charge the direct current bus capacitor. For example, the energy storage component 502 is controlled to provide the second voltage for the direct current bus capacitor, to stabilize a total output power on the output side of the direct current/direct current conversion module 201, or the total power on the output side of the direct current/direct current conversion module 201 can be kept constant.

In a possible implementation, the bus reference voltage may be determined based on open-circuit voltages of some of the plurality of photovoltaic batteries and a peak line voltage of a load connected to the photovoltaic power generation system. The some photovoltaic batteries may be photovoltaic batteries in an abnormal operating status, for example, a first photovoltaic battery on which IV curve scanning or multi-peak scanning is performed. Optionally, the open-circuit voltage of the photovoltaic battery may be predetermined.

The following briefly describes a manner in which the power control apparatus 501 determines the open-circuit voltage of the photovoltaic battery.

Before controlling to perform IV curve scanning or multi-peak scanning on a photovoltaic battery in the photovoltaic power generation system, the power control apparatus 501 may send a third instruction to the direct current/direct current conversion module 201, where the third instruction is used to instruct the direct current/direct current conversion module 201 to control the first photovoltaic battery to work in an open-circuit state, and detect the output voltage of the first photovoltaic battery when the first photovoltaic battery works in the open-circuit state, that is, an open-circuit voltage detection value of the first photovoltaic battery. The power control apparatus 501 may receive the open-circuit voltage detection value of the first photovoltaic battery that is reported by the direct current/direct current conversion module 201 or the direct current/direct current step-up circuit connected to the first photovoltaic battery. The power control apparatus 501 may determine the open-circuit voltage detection value as the open-circuit voltage of the first photovoltaic battery. The power control apparatus 501 may also determine the open-circuit voltage of the first photovoltaic battery based on the open-circuit voltage detection value and a first preset voltage threshold. For example, a sum of the open-circuit voltage detection value and the first preset voltage threshold is determined as the open-circuit voltage of the first photovoltaic battery.

In this embodiment of this application, the process in which the power control apparatus 501 determines the open-circuit voltage of the photovoltaic battery is merely used as an example for description, and is not used as a specific limitation on a manner of determining the open-circuit voltage of the first photovoltaic battery. It should be understood that the power control apparatus 501 may further learn of the open-circuit voltage of the first photovoltaic battery in another manner, for example, the power control apparatus 501 directly receives the open-circuit voltage of the first photovoltaic battery that is reported by the direct current/direct current conversion module 201 or the direct current/direct current step-up circuit connected to the first photovoltaic battery.

Because the load connected to the photovoltaic power generation system is the load connected to the direct current bus capacitor in the photovoltaic power generation system, a peak line voltage of the load connected to the direct current bus capacitor is a peak line voltage of the load connected to the photovoltaic power generation system. For ease of description, the peak line voltage of the load connected to the photovoltaic power generation system is denoted as a fourth voltage herein. Optionally, the power control apparatus 501 may use a peak line voltage of a power grid connected to the photovoltaic power generation system as the fourth voltage. Alternatively, the power control apparatus 501 may use a sum of the peak line voltage of the power grid and a second preset voltage threshold as the peak line voltage of the load. The power control apparatus 501 may obtain in advance the peak line voltage of the power grid connected to the photovoltaic power generation system, or the power control apparatus 501 may store the peak line voltage of the power grid connected to the photovoltaic power generation system. The peak line voltage of the power grid connected to the photovoltaic power generation system may be obtained by using any detection method or obtaining method in the art. This is not limited in this embodiment of this application.

The power control apparatus 501 may determine the bus reference voltage based on the open-circuit voltages of some photovoltaic batteries in the plurality of photovoltaic batteries and the peak line voltage of the load connected to the photovoltaic power generation system, so as to determine whether the detected voltage on the direct current bus capacitor meets the preset compensation condition. For example, if the fourth voltage is greater than or equal to a maximum value of open-circuit voltages of photovoltaic batteries in the first photovoltaic battery, the power control apparatus 501 may use the fourth voltage as the bus reference voltage. If the fourth voltage is less than the maximum value of the open-circuit voltages of the photovoltaic batteries in the first photovoltaic battery, the power control apparatus 501 may use the maximum value as the bus reference voltage.

In a possible case, before the power control apparatus 501 detects the voltage of the direct current bus capacitor, at least one photovoltaic battery (some of the plurality of photovoltaic batteries) in the plurality of photovoltaic batteries is in the abnormal operating status, or battery performance detection (for example, IV curve scanning or multi-peak scanning) is performed on at least one photovoltaic battery in the photovoltaic power generation system. The power control apparatus 501 may pre-determine an open-circuit voltage of each photovoltaic battery in the at least one photovoltaic battery.

In an example, one photovoltaic battery q1 in the plurality of photovoltaic batteries is in the abnormal operating status. If an open-circuit voltage of the photovoltaic battery q 1 is greater than or equal to the fourth voltage, the power control apparatus 501 may use the open-circuit voltage of the photovoltaic battery q1 in a bus reference voltage set as the bus reference voltage. If the open-circuit voltage of the photovoltaic battery q 1 is lower than the fourth voltage, the power control apparatus 501 uses the fourth voltage in the bus reference voltage set as the bus reference voltage.

In another example, a plurality of photovoltaic batteries in the plurality of photovoltaic batteries are in the abnormal operating status. For example, a photovoltaic battery q2 and a photovoltaic battery q3 are in the abnormal operating status. It is assumed that an open-circuit voltage of the photovoltaic battery q2 is larger in the photovoltaic battery q2 and the photovoltaic battery q3. If the open-circuit voltage of the photovoltaic battery q2 is greater than or equal to the fourth voltage, the power control apparatus 501 uses the open-circuit voltage of the photovoltaic battery q2 in the bus reference voltage set as the bus reference voltage. If the open-circuit voltage of the photovoltaic battery q2 is less than the fourth voltage, the power control apparatus 501 may use the fourth voltage in the bus reference voltage set as the bus reference voltage.

In a possible implementation, after detecting the first voltage of the direct current bus capacitor, the power control apparatus 501 determines that the detected first voltage of the direct current bus capacitor does not meet the preset compensation condition, and the power control apparatus 501 may control the energy storage component 502 to obtain first electric energy from the direct current bus capacitor, that is, absorb, via the direct current bus capacitor, the power that is output by the direct current/direct current conversion module 201, or control the energy storage component 502 to store a part of the output power of the direct current/direct current conversion module 201. For example, the bus reference voltage may also be used as a voltage threshold for determining, by the power control apparatus 501, whether to control the energy storage component 502 to obtain electric energy from the direct current bus capacitor. The power control apparatus 501 may control, when detecting that the voltage on the direct current bus capacitor is greater than the bus reference voltage, the energy storage component 502 to obtain electric energy from the direct current bus capacitor. It may be understood that the bus reference voltage may be used as a voltage threshold for determining, by the power control apparatus 501, whether the energy storage component 502 is controlled to charge the direct current bus capacitor, or whether the energy storage component 502 is controlled to obtain electric energy from the direct current bus capacitor.

For example, the energy storage component 502 may store the absorbed first electric energy into a power supply component included in the energy storage component 502, where the first electric energy may be determined by the power control apparatus 501 based on the first voltage and the bus reference voltage. In such a design, the power control apparatus 501 may use the energy storage component 502 to absorb excess electric energy that is output by the direct current/direct current conversion module 201, and maintain the total output power on the output side of the direct current/direct current conversion module 201, to avoid fluctuation of the total output power on the output side of the direct current/direct current conversion module 201.

In a possible implementation, the power control apparatus 501 may further control each photovoltaic battery in the photovoltaic power generation system to work in the normal operating status, so that the photovoltaic power generation system can operate normally. In this embodiment of this application, that a photovoltaic battery works in the normal operating status may also be referred to as that the photovoltaic battery works at a preset operating point.

For example, when the power control apparatus 501 controls the first photovoltaic battery to switch from working in the normal operating status to working in a status corresponding to the first instruction, the power control apparatus 501 may not change a status of a photovoltaic battery (denoted as a second photovoltaic battery for ease of differentiation) other than the first photovoltaic battery in the plurality of photovoltaic batteries, so that each photovoltaic battery in the second photovoltaic battery keeps working in the normal operating status.

In an example, the preset operating point may be an operating point (denoted as a fifth voltage) corresponding to the maximum output power of the photovoltaic battery. Optionally, the power control apparatus 501 may control the direct current/direct current conversion module 201 or the direct current/direct current step-up circuit connected to the photovoltaic battery to determine, by using a maximum power point tracking (maximum power point tracking, MPPT) technology, an operating point corresponding to the maximum output power of the photovoltaic battery. Optionally, the direct current/direct current conversion module 201 may be implemented as an MPPT combiner box.

In a process of performing IV curve scanning or multi-peak scanning on the first photovoltaic battery, the power control apparatus 501 may control an output voltage of another photovoltaic battery to be the fifth voltage, so that the another photovoltaic battery can output a maximum power, and the total power on the direct current side of the photovoltaic power generation system can be increased, to ensure that the photovoltaic power generation system can continue to provide a power for the load (for example, the power grid).

In a possible implementation, the power control apparatus 501 may be connected to the direct current/alternating current inverter module 202. For example, before controlling the direct current/direct current conversion module 201 to perform IV curve scanning or multi-peak scanning on the first photovoltaic battery, the power control apparatus 501 may determine the total output power of the direct current/alternating current inverter module 202 as a total output power reference value. In a process in which the direct current/direct current conversion module 201 performs IV curve scanning or multi-peak scanning on the first photovoltaic battery, the power control apparatus 501 may control the direct current/alternating current inverter module 202 to work in a constant power mode.

That the direct current/alternating current inverter module 202 works in the constant power mode may be considered as that a power that is output by the direct current/alternating current inverter module 202 or a power that is output to the connected load is within a preset power range. A difference between each power value within the preset power range and the total output power reference value is not less than a preset power threshold. In a process of performing IV curve scanning or multi-peak scanning on the first photovoltaic battery, the total output power that is output by the direct current/alternating current inverter module 202 to the load is a value within the preset power range.

For example, before IV curve scanning is performed on the first photovoltaic battery, the power control apparatus 501 may obtain the total output power of the direct current/alternating current inverter module 202, and use the total output power as a total output power reference value Pref. The power control apparatus 501 controls a difference between a total power P' that is output by the direct current/alternating current inverter module 202 in the process of performing IV curve scanning on the first photovoltaic battery and the total output power reference value Pref to not exceed the preset power threshold. The power control apparatus 501 controls the energy storage component 502 to compensate for the impact on the total power of the direct current side due to performing IV curve scanning on the first photovoltaic battery, to stabilize the total power on the direct current side. Then, the direct current/alternating current inverter module 202 is controlled to be in the constant power mode, so that total power fluctuation on the alternating current side can be reduced, and the photovoltaic power generation system can stably output a power to the load.

The following describes a process in which the energy storage component 502 charges or discharges the direct current bus capacitor. As shown in FIG. 3, the energy storage component 502 may include a direct current/direct current conversion circuit, a power supply component, and the like. The direct current/direct current conversion circuit may perform voltage step-up processing on a voltage provided by the power supply component in the energy storage component 502, and output a processed voltage to the direct current bus capacitor, so that the energy storage component 502 charges the direct current bus capacitor. The direct current/direct current conversion circuit may also perform voltage step-down processing on the voltage at the direct current bus capacitor, so that the power supply component in the energy storage component 502 may absorb, via the direct current bus capacitor, the power that is output by the direct current/direct current conversion module 201, so that the direct current/direct current conversion module 201 can charge the energy storage component 502.

The power control apparatus 501 may be coupled to a direct current/direct current conversion circuit in the energy storage component 502, for example, a communication connection. The power control apparatus 501 may instruct, by using a message, an instruction, a command, or the like, the direct current/direct current conversion circuit to control the power supply component to operate in a charging state or operate in a discharging state, so that the energy storage component 502 charges, via the direct current bus capacitor, a load connected to the direct current bus capacitor, or absorbs, via the direct current bus capacitor, the power that is output by the direct current/direct current conversion module 201. Optionally, the direct current/direct current conversion circuit may be an integrated circuit, such as a second controller.

In a possible implementation, as shown in FIG. 3, the power control apparatus 501 may include a detection circuit and a control circuit, and the control circuit is connected to the detection circuit. The detection circuit is coupled to the direct current bus capacitor, and may detect a voltage of the direct current bus capacitor. The control circuit may be connected to the energy storage component 502, and may perform charging control and/or discharging control on the energy storage component 502. For example, the control circuit in the power control apparatus 501 may control the energy storage component 502 to charge the direct current bus capacitor, that is, control the energy storage component 502 to discharge to the direct current bus capacitor. The control circuit in the power control apparatus 501 may control the energy storage component 502 to absorb electric energy of the direct current bus capacitor, that is, the energy storage component 502 is charged. Optionally, the power control apparatus 501 may further include a memory, configured to store a computer program instruction. The control circuit may run the computer program instruction, so that one or more steps in any photovoltaic power generation system power control method provided in the embodiments of this application are performed. Optionally, the control circuit may include one or more controllers. A plurality of controllers may collaboratively perform the power control method provided in the embodiments of this application.

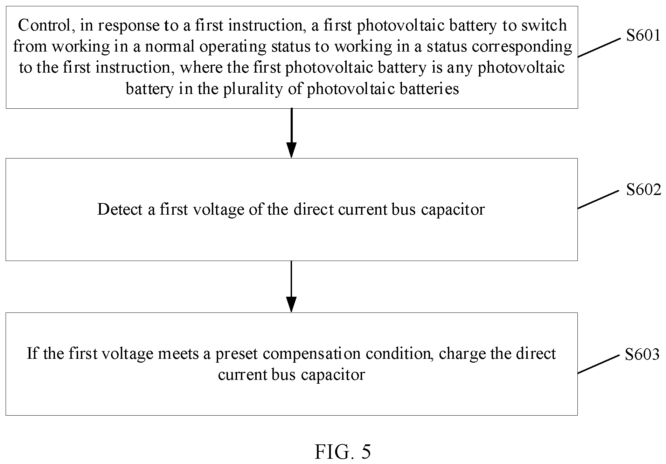

Refer to FIG. 5, an embodiment of this application provides a photovoltaic power generation system power control method. The power control apparatus 501 may perform or implement one or more steps in the method. The photovoltaic power generation system power control method may include the following steps.

Step S601: A control circuit of the power control apparatus 501 controls, in response to a first instruction, a first photovoltaic battery to switch from working in a normal operating status to working in a status corresponding to the first instruction, where the first photovoltaic battery is any photovoltaic battery in a plurality of photovoltaic batteries.

The first instruction may be an IV curve scanning instruction or a multi-peak scanning instruction. The control circuit of the power control apparatus 501 may control, in response to the IV curve scanning instruction, a direct current/direct current conversion module 201 to perform IV curve scanning on the first photovoltaic battery. Alternatively, the control circuit of the power control apparatus 501 may control, in response to the multi-peak scanning instruction, the direct current/direct current conversion module 201 to perform multi-peak scanning on the first photovoltaic battery. The first photovoltaic battery may be at least one of a plurality of photovoltaic batteries.

Step S602: A detection circuit of the power control apparatus 501 detects a first voltage of a direct current bus capacitor.

The detection circuit of the power control apparatus 501 may detect a voltage of the direct current bus capacitor, and for ease of description, a detected voltage of the direct current bus capacitor is recorded as a first voltage. It should be understood that, that the detection circuit of the power control apparatus 501 detects the voltage of the direct current bus capacitor may be considered as detecting a voltage of a direct current bus.

Step S603: If the first voltage meets a preset compensation condition, the control circuit of the power control apparatus 501 controls the energy storage component 502 to charge the direct current bus capacitor.

The control circuit of the power control apparatus 501 may be coupled to a direct current/direct current conversion circuit in the energy storage component 502, control the direct current/direct current conversion circuit to perform voltage step-up processing on a voltage provided by a power supply component in the energy storage component 502, and output a processed voltage to the direct current bus capacitor, so that the energy storage component 502 charges the direct current bus capacitor.

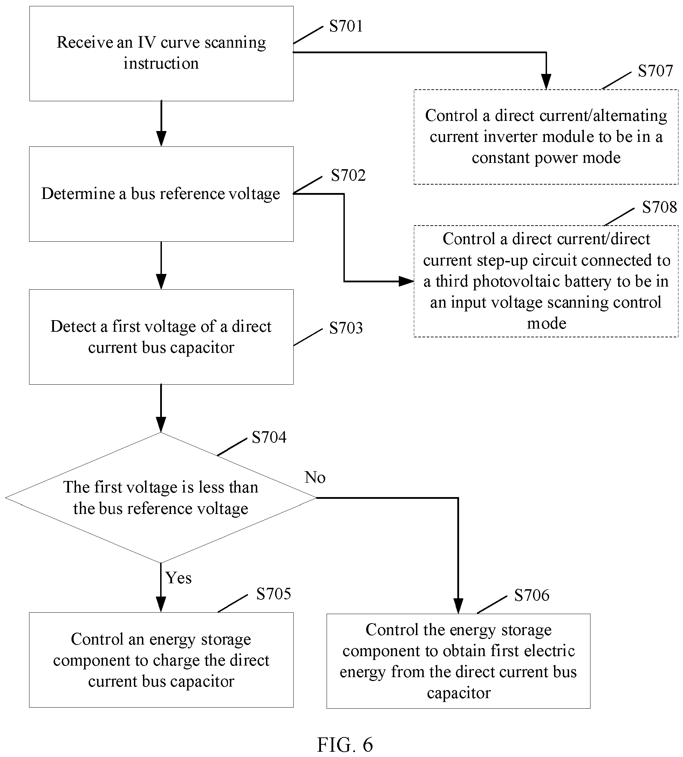

Refer to FIG. 6, the following uses a scenario in which an output voltage of a photovoltaic battery changes because IV curve scanning is performed on the photovoltaic battery as an example to describe a power control process of a photovoltaic power generation system including the foregoing power control apparatus 501 and energy storage component 502. The power control method may include the following steps.

Step S701: The power control apparatus 501 receives an IV curve scanning instruction.

The power control apparatus 501 may receive an IV curve scanning instruction sent by a first device, and the first device may be a device such as an upper computer. After receiving the IV curve scanning instruction, the power control apparatus 501 may start a process of performing IV curve scanning on a photovoltaic battery (denoted as a third photovoltaic battery) connected to at least one direct current/direct current step-up circuit (denoted as a first direct current/direct current step-up circuit) in the photovoltaic power generation system.

Step S702: The power control apparatus 501 determines a bus reference voltage.

The power control apparatus 501 may select a voltage from a bus reference voltage set as the bus reference voltage. The bus reference voltage set may include a maximum value V1 of an input voltage of the at least one direct current/direct current step-up circuit. For example, each third photovoltaic battery is controlled to work in an open-circuit state. Open-circuit voltages of third photovoltaic batteries are detected, and a maximum value of the open-circuit voltages of the third photovoltaic batteries is used as a maximum value of an input voltage of the at least one direct current/direct current step-up circuit.

The bus reference voltage set may further include a predetermined reference voltage V2. The power control apparatus 501 may determine the preset reference voltage based on a peak line voltage of a load connected to the photovoltaic power generation system. For example, when IV curve scanning is performed on the photovoltaic battery, a reference voltage corresponding to the load connected to the photovoltaic power generation system is calculated. For example, the power control apparatus 501 may determine, based on a total power required by the load connected to the photovoltaic power generation system, a reference voltage corresponding to the total power.

If the maximum value V1 of the input voltage of the at least one direct current/direct current step-up circuit is not less than the reference voltage V2 corresponding to the load connected to the photovoltaic power generation system when IV curve scanning is performed on the photovoltaic battery, the power control apparatus 501 may use the maximum value V1 of the input voltage of the at least one direct current/direct current step-up circuit as the bus reference voltage.

If the maximum value V1 of the input voltage of the at least one direct current/direct current step-up circuit is less than the reference voltage V2 corresponding to the load connected to the photovoltaic power generation system when IV curve scanning is performed on the photovoltaic battery, the power control apparatus 501 determines the reference voltage V2 corresponding to the load connected to the photovoltaic power generation system when IV curve scanning is performed on the photovoltaic battery as the bus reference voltage.

After the power control apparatus 501 performs step 702, the power control apparatus 501 may control, in response to the IV curve scanning instruction, the first direct current/direct current step-up circuit in the direct current/direct current conversion module 201 to be in a voltage scanning control mode (S708 in FIG. 6), so that the first direct current/direct current step-up circuit performs IV curve scanning on the third photovoltaic battery.

Optionally, the power control apparatus 501 may send a first control instruction to the direct current/direct current step-up circuit connected to the third photovoltaic battery in the direct current/direct current conversion module 201, where the first control instruction is used to indicate that the direct current/direct current step-up circuit is in the voltage scanning control mode. When the direct current/direct current step-up circuit is in the voltage scanning control mode, operations such as adjusting an output voltage of a connected photovoltaic battery, and detecting an output current of the photovoltaic battery may be performed in a preset manner, to obtain voltage and current data, so as to determine an IV curve of the photovoltaic battery.

The first direct current/direct current step-up circuit may record output currents of the third photovoltaic battery at different output voltages, or may store the output currents in a data storage unit. After completing IV curve scanning on photovoltaic batteries connected to direct current/direct current step-up circuits, the direct current/direct current step-up circuits in the first direct current/direct current step-up circuit may send output currents of the photovoltaic batteries connected to the direct current/direct current step-up circuits at different output voltages to the first device (for example, an upper computer), so that the first device may determine, based on the output currents that are of the photovoltaic batteries connected to the direct current/direct current step-up circuits at different output voltages and that are reported by the direct current/direct current step-up circuits in the first direct current/direct current step-up circuit, IV curves of the direct current/direct current step-up circuits in the first direct current/direct current step-up circuit. Optionally, the first direct current/direct current step-up circuit may send, to the power control apparatus 501, the output currents of the photovoltaic batteries connected to the first direct current/direct current step-up circuit at different output voltages.

In a process in which the first direct current/direct current step-up circuit performs IV curve scanning on the third photovoltaic battery, the power control apparatus 501 may synchronously perform steps such as step S703. It may be understood that, in a case that there are a plurality of first direct current/direct current step-up circuits, that is, IV curve scanning may be synchronously performed on two or more photovoltaic batteries in the photovoltaic power generation system, so that duration of performing IV curve scanning on each photovoltaic battery in the photovoltaic power generation system can be shortened.

Step S703: The power control apparatus 501 detects a first voltage of a direct current bus capacitor.

The power control apparatus 501 may detect the direct current bus capacitor, and record a detected voltage as the first voltage. For example, the power control apparatus 501 may detect a voltage of the direct current bus capacitor in real time.

Step S704: The power control apparatus 501 determines whether the first voltage is less than the bus reference voltage; if the first voltage is less than the bus reference voltage, step S705 is performed next; and if the first voltage is not less than the bus reference voltage, step S706 is performed next.

Step S705: The power control apparatus 501 controls the energy storage component to charge the direct current bus capacitor.

If determining that the first voltage is less than the bus reference voltage determined in step S702, the power control apparatus 501 controls the energy storage component 502 to charge the direct current bus capacitor. For example, the energy storage component 502 is controlled to provide a second voltage for the direct current bus capacitor, where the second voltage may be determined based on the first voltage and the bus reference voltage.

In such a design, the energy storage component 502 is used to compensate for power fluctuation of the at least one direct current/direct current step-up circuit on the direct current side of the photovoltaic power generation system, to reduce impact on the load caused when IV curve scanning is performed on the photovoltaic battery connected to the at least one direct current/direct current step-up circuit, so that an output power on the alternating current side of the photovoltaic power generation system can be stable at an output power on the alternating current side generated before IV curve scanning is started on any photovoltaic battery. In this way, a load side cannot sense the power fluctuation on the direct current side of the photovoltaic power generation system.

Step S706: The power control apparatus 501 controls the energy storage component to obtain first electric energy from the direct current bus capacitor.

If it is determined that the first voltage is not less than the bus reference voltage determined in step S702, the power control apparatus 501 controls the energy storage component 502 to absorb the first electric energy on the direct current bus capacitor. Alternatively, electric energy used by the direct current bus capacitor to charge the energy storage component 502 may be controlled to be the first electric energy. The first electric energy may be determined based on the first voltage and the bus reference voltage.

In a possible design, after step S701, the power control apparatus 501 may further perform a process of step S707, for example, control the direct current/alternating current inverter module to be in a constant power mode. The direct current/alternating current inverter module 202 is in the constant power mode, an output power is relatively stable, and a total power provided for the load connected to the photovoltaic power generation system fluctuates slightly.

In an example, the power control apparatus 501 may instruct step S702 and step S707 in parallel after step S701, that is, after receiving the IV curve scanning instruction, the power control apparatus 501 may control the direct current/alternating current inverter module 202 to be in the constant power mode. The power control apparatus 501 may also perform step S707 before performing step S708.

For example, before controlling the first direct current/direct current step-up circuit to perform IV curve scanning on the third photovoltaic battery, the power control apparatus 501 may obtain a total output power of the direct current/alternating current inverter module 202, and use the total output power as a total output power reference value Pref. The power control apparatus 501 controls a difference between a total power P' that is output by the direct current/alternating current inverter module 202 in the process of performing IV curve scanning on the third photovoltaic battery and the total output power reference value Pref to not exceed the preset power threshold.

The power control apparatus 501 controls the energy storage component 502 to compensate for the impact on the total power of the direct current side due to performing IV curve scanning on the third photovoltaic battery, to stabilize the total power on the direct current side. Then, the direct current/alternating current inverter module 202 is controlled to be in the constant power mode, so that total power fluctuation on the alternating current side can be reduced, and the photovoltaic power generation system can stably output a power to the load.

In another possible design, after step S702, the power control apparatus 501 may control a direct current/direct current step-up circuit connected to a photovoltaic battery other than the third photovoltaic battery in the plurality of photovoltaic batteries to work in a maximum power point tracking MPPT state, which is alternatively referred to as working in an MPPT tracing mode.

In a process in which the first direct current/direct current conversion circuit performs IV curve scanning on the third photovoltaic battery, the power control apparatus 501 may also send a second control instruction to a direct current/direct current step-up circuit connected to a fourth photovoltaic battery (a photovoltaic battery other than the third photovoltaic battery in the plurality of photovoltaic batteries). The second control instruction is used to instruct the direct current/direct current step-up circuit to adjust an output voltage of the photovoltaic battery based on an MPPT algorithm or technology, so that the photovoltaic battery works in a maximum output power state. Another direct current/direct current step-up circuit other than the first direct current/direct current step-up circuit works in the MPPT tracing (or tracking) mode, to ensure that the photovoltaic power generation system continues to provide a power for the load (for example, a power grid). Optionally, the power control apparatus 501 may further send a third control instruction to the direct current/direct current step-up circuit connected to the fourth photovoltaic battery. The third control instruction is used to instruct the direct current/direct current step-up circuit to adjust the output voltage of the photovoltaic battery, so that the photovoltaic battery works at a preset operating point, and it can also be ensured that the photovoltaic power generation system can continue to provide a power for the load (for example, a power grid).

In this embodiment of this application, the power control apparatus 501 may compensate for power fluctuation of a scanning branch by using the energy storage component 502, and control a photovoltaic battery on a non-scanning branch to work in the MPPT tracking state, to ensure that the direct current side of the photovoltaic power generation system has a maximum power output during IV curve scanning, so that an output power provided by the photovoltaic power generation system for the load is constant (small fluctuation within a specific range), and impact on the load (for example, a power grid) is minimized.

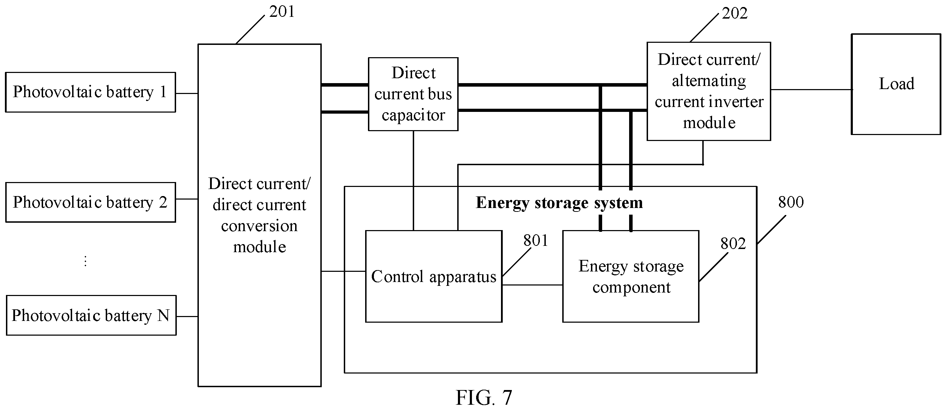

As shown in FIG. 7, an embodiment of this application further provides an energy storage system 800, which may manage (or control) an output power of a photovoltaic power generation system. The photovoltaic power generation system may include a plurality of photovoltaic batteries, a direct current/direct current conversion module 201, and a direct current bus that are sequentially coupled. The energy storage system 800 may include a control apparatus 801 and an energy storage component 802.

The control apparatus 801 may be a controller, a processor, or a chip. The control apparatus 801 is coupled to the energy storage component 802. The control apparatus 801 may be coupled to a direct current bus capacitor. The control apparatus 801 may have some or all functions of a power control apparatus 501 in the foregoing embodiments of this application. The energy storage component 802 may be the energy storage component 502 in the foregoing embodiments of this application. The energy storage component 802 may be configured to store or provide electric energy.

For example, the control apparatus 801 may detect a first voltage of the direct current bus capacitor, and if the first voltage meets a preset compensation condition, control the energy storage component 801 to charge the direct current bus capacitor, to stabilize a total power on an output side of a direct current/direct current conversion module 201. Optionally, the direct current bus capacitor is coupled to a direct current load. The control apparatus 801 may stabilize, through an operation of controlling the energy storage component 801 to charge the direct current bus capacitor, a power provided by the direct current/direct current conversion module 201 for the load.

In a possible design, the photovoltaic power generation system may include a direct current/alternating current inverter module 202, and the direct current/alternating current inverter module 202 is coupled to the direct current bus capacitor. The direct current/alternating current inverter module 202 may convert a direct current provided by a direct current bus into an alternating current, and provide the alternating current for a connected load.

The control apparatus 801 may be coupled to the direct current/direct current conversion module 201, and the control apparatus 801 may interact with the direct current/direct current conversion module 201. For example, the control apparatus 801 may communicate with a controller included in the direct current/direct current conversion module 201, and the control apparatus 801 may receive information about a photovoltaic battery provided by the direct current/direct current conversion module 201, for example, an open-circuit voltage of the photovoltaic battery, or a maximum value of open-circuit voltages of a plurality of photovoltaic batteries.

The control apparatus 801 may be coupled to the direct current/alternating current inverter module 202, and the control apparatus 801 may interact with the direct current/alternating current inverter module 202. For example, the control apparatus 801 may communicate with a controller included in the direct current/alternating current inverter module 202. The control apparatus 801 may receive load information provided by the direct current/alternating current inverter module 202. For example, in a case that the load is a power grid, the direct current/alternating current inverter module 202 may provide a peak line voltage of the power grid for the control apparatus 801.

Optionally, the control apparatus 801 may obtain the peak line voltage of the power grid in advance. For example, the control apparatus 801 may obtain the peak line voltage of the power grid in real time in a communications manner.

In this embodiment of this application, the direct current/direct current conversion module 201 may further detect performance of the photovoltaic battery. For example, the direct current/direct current conversion module 201 may further perform, in response to an instruction that is sent by an upper computer and that is for performing IV curve scanning on one or more photovoltaic batteries, IV curve scanning on a photovoltaic battery corresponding to the instruction. In a process in which the direct current/direct current conversion module 201 performs IV curve scanning on one or more photovoltaic batteries, the energy storage system 800 may stabilize a power on an output side of the direct current/direct current conversion module 201, to avoid a relatively large fluctuation of an output power on an alternating current side of the direct current/alternating current inverter module 202.

In a possible design, the direct current/alternating current inverter module 202 may work in a constant power mode, to maintain a stable output power of the alternating current side. Optionally, the direct current/direct current conversion module 201 may interact with the direct current/alternating current inverter module 202. For example, the controller included in the direct current/direct current conversion module 201 may interact with the controller included in the direct current/alternating current inverter module 202. After receiving an instruction for detecting the performance of the photovoltaic battery, the direct current/direct current conversion module 201 may notify the direct current/alternating current inverter module 202. After receiving the instruction, the direct current/alternating current inverter module 202 may switch to work in the constant power mode.

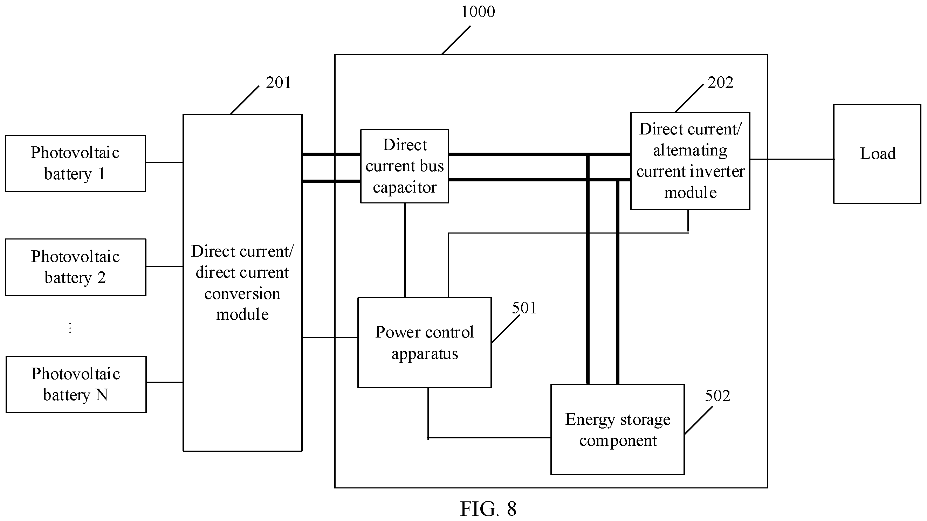

As shown in FIG. 8, the photovoltaic power generation system provided in this application may include a plurality of photovoltaic batteries, a direct current/direct current conversion module 201, and an inverter system 1000. The inverter system 1000 may include a direct current/alternating current inverter module 202, a direct current bus capacitor, the power control apparatus 501 provided in the foregoing embodiment, and the energy storage component 502. The plurality of photovoltaic batteries are coupled to an input side of the direct current/direct current conversion module 201, an output side of the direct current/direct current conversion module 201 is coupled to the direct current bus capacitor, an input side of the direct current/alternating current inverter module 202 is coupled to the direct current bus capacitor, and an output side of the direct current/alternating current inverter module 202 may be coupled to a load. The energy storage component 502 may be coupled to the direct current bus capacitor, and is configured to discharge or charge by using the direct current bus capacitor. The power control apparatus 501 may be coupled to the direct current bus capacitor, and detect a voltage of the direct current bus capacitor. The power control apparatus 501 may be coupled to the energy storage component 502. The power control apparatus 501 may control the energy storage component 502 to provide a power by using the direct current bus capacitor, and the power control apparatus 501 may also control the energy storage component 502 to absorb a power from the direct current bus capacitor. Optionally, the inverter system 1000 may include the energy storage component 502.

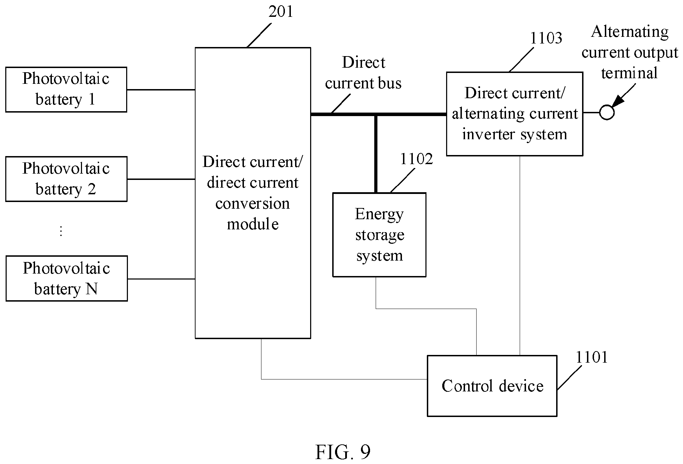

An embodiment of this application further provides a photovoltaic power generation system. As shown in FIG. 9, the photovoltaic power generation system may include a plurality of photovoltaic batteries, a direct current/direct current conversion module 201, a direct current bus, a control device 1101, an energy storage system 1102, and a direct current/alternating current inverter system 1103. Each photovoltaic battery is coupled to an input side of the direct current/direct current conversion module 201, and an output side of the direct current/direct current conversion module 201 is coupled to the direct current bus. The energy storage system 1102 is coupled to the direct current bus. The direct current/alternating current inverter system 1103 is coupled to the direct current bus.

The direct current/direct current conversion module 201 may implement or execute any MPPT tracking technology, to adjust an output voltage of a connected photovoltaic battery. Alternatively, the direct current/direct current conversion module 201 may collect an output voltage and an output current of the photovoltaic battery, and send the output voltage and the output current to the control device 1101, to perform IV curve scanning on the photovoltaic battery. Optionally, the direct current/direct current conversion module 201 may be implemented as an MPPT combiner box.

The control device 1101 may have a function of the power control apparatus 501 in the foregoing embodiment. The control device 1101 may perform one or more steps in the photovoltaic power generation system power control method provided in the embodiments of this application. The control device 1101 may include the power control apparatus 501 in the foregoing embodiment. The control device 1101 may interact with the direct current/direct current conversion module 201. The control device 1101 may also interact with the energy storage system 1102. The control device 1101 may also interact with the direct current/alternating current inverter system 1103.

In a possible design, the control device 1101 may also include one or more processors. The processor may be a general-purpose processor, a dedicated processor, or the like. For example, the processor may be a baseband processor or a central processing unit. The baseband processor may be configured to process a communications protocol and communications data. The central processing unit may be configured to: control a communications apparatus (for example, a base station, a terminal, or a chip), execute a software program, and process data of the software program.

The control device 1101 may also include one or more memories. Optionally, the memory may further store data. Optionally, the processor may also store an instruction and/or data. For example, an instruction for controlling the photovoltaic power generation system. The processor and the memory may be separately disposed, or may be integrated together.

The control device 1101 may include a communications unit, configured to communicate with an external device, for example, the direct current/direct current conversion module 201, the energy storage system 1102, or the direct current/alternating current inverter system 1103.

The energy storage system 1102 may have a function of the energy storage component 502 in the foregoing embodiment. The energy storage system 1102 may provide a power for the direct current bus, or may absorb a power on the direct current bus. The control device 1101 may control the energy storage system 1102 to implement one or more steps in the photovoltaic power generation system power control method provided in the embodiments of this application. Optionally, the energy storage system 1102 may include a processor and a battery. The processor may communicate with an external device, for example, the control device 1101. The processor may control the battery to charge the direct current bus, or may control the battery to absorb a power on the direct current bus.

The direct current/alternating current inverter system 1103 may convert a direct current into an alternating current, and provide the alternating current for a load, for example, a power grid, by using an alternating current output terminal. The direct current/alternating current inverter system 1103 may include at least one direct current/alternating current inverter circuit. The direct current/alternating current inverter system 1103 may include components such as an inverter.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A photovoltaic power generation system, comprising a plurality of photovoltaic batteries, a direct current/direct current conversion module, a direct current bus capacitor, an energy storage component, and a power control apparatus, wherein
an input side of the direct current/direct current conversion module is coupled to the plurality of photovoltaic batteries, an output side of the direct current/direct current conversion module is coupled to the direct current bus capacitor, and is configured to adjust an operating status of each photovoltaic battery, and output electric energy provided by the photovoltaic batteries to the direct current bus capacitor;
the energy storage component is coupled to the direct current bus capacitor, and is configured to store or provide electric energy;
the power control apparatus is separately coupled to the direct current bus capacitor and the energy storage component, and is configured to: detect a first voltage of the direct current bus capacitor, and when the first voltage meets a preset compensation condition, control the energy storage component to charge the direct current bus capacitor; and
the direct current bus capacitor is configured to couple a load.

2. The photovoltaic power generation system according to claim 1, wherein when controlling the energy storage component to charge the direct current bus capacitor, the power control apparatus is specifically configured to:
control the energy storage component to provide a second voltage for the direct current bus capacitor, wherein the second voltage is determined based on the first voltage and a bus reference voltage; and
the bus reference voltage is determined based on open-circuit voltages of some photovoltaic batteries in the plurality of photovoltaic batteries and a peak line voltage of the load.

3. The photovoltaic power generation system according to claim 2, wherein the power control apparatus is further configured to:
if the first voltage does not meet the preset compensation condition, control the energy storage component to obtain first electric energy from the direct current bus capacitor and store the first electric energy, wherein the first electric energy is determined based on the first voltage and the bus reference voltage.

4. The photovoltaic power generation system according to claim 2 or 3, wherein if a maximum value in the open-circuit voltages corresponding to the some photovoltaic batteries is greater than or equal to the peak line voltage of the load, the bus reference voltage is the maximum value in the open-circuit voltages corresponding to the some photovoltaic batteries; or
if a maximum value in the open-circuit voltages corresponding to the some photovoltaic batteries is less than the peak line voltage of the load, the bus reference voltage is the peak line voltage of the load.

5. The photovoltaic power generation system according to any one of claims 1 to 4, wherein the system further comprises: a direct current/alternating current inverter module, wherein an input side of the direct current/alternating current inverter module is coupled to the direct current bus capacitor, and an output side of the direct current/alternating current inverter module is configured to be coupled to the load; and
the direct current/alternating current inverter module is configured to convert electric energy that is output by the direct current/direct current conversion module to the direct current bus capacitor into an alternating current, and then provide the alternating current for the load.

6. The photovoltaic power generation system according to claim 5, wherein the power control apparatus is specifically configured to control the direct current/alternating current inverter module to output an alternating current of a first power for the load;
the first power is determined based on a first current and a third voltage; and
the first current and the third voltage are a current and a voltage that are output by the direct current/alternating current inverter module before the power control apparatus controls the direct current/direct current conversion module to perform IV curve scanning on some photovoltaic batteries in the plurality of photovoltaic batteries, or controls the direct current/direct current conversion module to perform multi-peak scanning on the some photovoltaic batteries.

7. The photovoltaic power generation system according to any one of claims 1 to 6, wherein the power control apparatus is further coupled to the direct current/direct current conversion module, and before detecting the first voltage of the direct current bus capacitor, the power control apparatus is further configured to:
control, in response to a first instruction, the direct current/direct current conversion module to perform IV curve scanning on a first photovoltaic battery, wherein the first photovoltaic battery is any one or more of the plurality of photovoltaic batteries; or
control, in response to a second instruction, the direct current/direct current conversion module to perform multi-peak scanning on the first photovoltaic battery.

8. A photovoltaic power generation system, comprising a plurality of photovoltaic batteries, a plurality of direct current/direct current conversion circuits, a direct current bus capacitor, an energy storage component, a direct current/alternating current inverter module, and a power control apparatus, wherein
an input side of each of the direct current/direct current conversion circuits is coupled to one photovoltaic battery, an output side of each of the direct current/direct current conversion circuits is coupled to the direct current bus capacitor, and is configured to: adjust an operating status of a connected photovoltaic battery, and output electric energy provided by the connected photovoltaic battery to the direct current bus capacitor;
the energy storage component is coupled to the direct current bus capacitor, and is configured to store or provide electric energy;
an input side of the direct current/alternating current inverter module is coupled to the direct current bus capacitor, and an output side of the direct current/alternating current inverter module is coupled to a load, and is configured to convert electric energy on the direct current bus capacitor into an alternating current, and then provide the alternating current for the load; and
the power control apparatus is separately coupled to the plurality of direct current/direct current conversion circuits, the direct current bus capacitor, the energy storage component, and the direct current/alternating current inverter module, and is configured to:
after receiving an IV curve scanning instruction, determine a first power provided by the direct current/alternating current inverter module for the load, wherein the instruction is used to indicate performing IV curve scanning on a first photovoltaic battery, and the first photovoltaic battery is at least one photovoltaic battery in the plurality of photovoltaic batteries;
control a first direct current/direct current conversion circuit connected to each photovoltaic battery in the first photovoltaic battery to adjust each photovoltaic battery to operate in an open-circuit state, and determine an open-circuit voltage of each photovoltaic battery; and
determine a bus reference voltage based on the open-circuit voltage of each photovoltaic battery and a peak line voltage of the load, wherein the bus reference voltage is a voltage threshold used to determine whether the energy storage component charges the direct current bus capacitor or obtains electric energy from the direct current bus capacitor.

9. The photovoltaic power generation system according to claim 8, wherein the power control apparatus is further configured to:
control, in response to the IV curve scanning instruction, the first direct current/direct current conversion circuit to perform IV curve scanning on the first photovoltaic battery;
detect a first voltage of the direct current bus capacitor in a process in which the first direct current/direct current conversion circuit performs IV curve scanning on the first photovoltaic battery;
when the first voltage is less than the bus reference voltage, control the energy storage component to charge the direct current bus capacitor; or when the first voltage is greater than the bus reference voltage, control the energy storage component to obtain first electric energy from the direct current bus capacitor and store the first electric energy, wherein the first electric energy is determined based on the first voltage and the bus reference voltage; and
in the process in which the first direct current/direct current conversion circuit performs IV curve scanning on the first photovoltaic battery, control the direct current/alternating current inverter module to work in a constant power output state, wherein the constant power output state is converting a direct current on the direct current bus capacitor into an alternating current of a second power and providing the alternating current to the load, and a difference between the second power and the first power is less than a preset power threshold.

10. The photovoltaic power generation system according to claim 9, wherein when controlling the energy storage component to charge the direct current bus capacitor, the power control apparatus is specifically configured to:
control the energy storage component to provide a second voltage for the direct current bus capacitor, wherein the second voltage is determined based on the first voltage and the bus reference voltage.

11. The photovoltaic power generation system according to claim 8, wherein the power control apparatus is further configured to:
control a direct current/direct current conversion circuit other than the first direct current/direct current conversion circuit in the plurality of direct current/direct current conversion circuits to work in a maximum power point tracking MPPT state.

12. The photovoltaic power generation system according to any one of claims 8 to 11, wherein the bus reference voltage is a maximum value of the open-circuit voltage of each photovoltaic battery in the first photovoltaic battery and the peak line voltage of the load.

13. The photovoltaic power generation system according to any one of claims 9 to 12, wherein when performing IV curve scanning on the first photovoltaic battery, the first direct current/direct current conversion circuit is specifically configured to:
adjust an output voltage of each photovoltaic battery in the first photovoltaic battery, and record output currents of each photovoltaic battery at different output voltages; and
send the recorded output currents of each photovoltaic battery at the different output voltages to a first device, wherein the first device is a device that sends the IV curve scanning instruction.

14. A power control apparatus, applied to a photovoltaic power generation system, wherein the photovoltaic power generation system comprises a plurality of photovoltaic batteries, a direct current/direct current conversion module, a direct current bus capacitor, and an energy storage component, an input side of the direct current/direct current conversion module is coupled to the plurality of photovoltaic batteries, an output side of the direct current/direct current conversion module is coupled to the direct current bus capacitor, the energy storage component is coupled to the direct current bus capacitor, and the direct current bus capacitor is configured to couple a load;
the power control apparatus comprises a detection circuit and a control circuit, wherein
the detection circuit is configured to detect a first voltage of the direct current bus capacitor; and
the control circuit is coupled to the detection circuit, and is configured to: when it is determined that the first voltage meets a preset compensation condition, control the energy storage component to charge the direct current bus capacitor.

15. The apparatus according to claim 14, wherein when controlling the energy storage component to charge the direct current bus capacitor, the control circuit is specifically configured to:
control the energy storage component to provide a second voltage for the direct current bus capacitor, wherein the second voltage is determined based on the first voltage and a bus reference voltage; and
the bus reference voltage is determined based on open-circuit voltages of some photovoltaic batteries in the plurality of photovoltaic batteries and a peak line voltage of the load.

16. The apparatus according to claim 15, wherein the control circuit is further configured to:
if it is determined that the first voltage does not meet the preset compensation condition, control the energy storage component to obtain first electric energy from the direct current bus capacitor and store the first electric energy, wherein the first electric energy is determined based on the first voltage and the bus reference voltage.

17. The apparatus according to claim 15 or 16, wherein if a maximum value in the open-circuit voltages corresponding to the some photovoltaic batteries is greater than or equal to the peak line voltage of the load, the bus reference voltage is determined as the maximum value in the open-circuit voltages corresponding to the some photovoltaic batteries; or
if a maximum value in the open-circuit voltages corresponding to the some photovoltaic batteries is less than the peak line voltage of the load, the bus reference voltage is determined as the peak line voltage of the load.

18. The apparatus according to any one of claims 14 to 17, wherein the control circuit is further configured to:
before the detection circuit detects the first voltage of the direct current bus capacitor, control, in response to a first instruction, the direct current/direct current conversion module to perform IV curve scanning on a first photovoltaic battery, wherein the first photovoltaic battery is any one of the plurality of photovoltaic batteries, or control, in response to a second instruction, the direct current/direct current conversion module to perform multi-peak scanning on the first photovoltaic battery.

19. An energy storage system, comprising an energy storage component and the power control apparatus according to any one of claims 14 to 18.
